**Europäisches Patentamt**

**European Patent Office**

**Office européen des brevets**

(19)

(11) Veröffentlichungsnummer: **0 118 035**
**B1**

(12) # EUROPÄISCHE PATENTSCHRIFT

(45) Veröffentlichungstag der Patentschrift:
14.01.87

(51) Int. Cl.⁴: **B 23 B 51/06**, B 23 P 15/32

(21) Anmeldenummer: **84101069.7**

(22) Anmeldetag: **02.02.84**

(54) Bohrwerkzeug mit Verfahren zur Herstellung eines Bohrwerkzeugs.

(30) Priorität: **18.03.83 DE 3309860**
**06.02.83 DE 3304277**

(43) Veröffentlichungstag der Anmeldung:
**12.09.84 Patentblatt 84/37**

(45) Bekanntmachung des Hinweises auf die Patenterteilung:
**14.01.87 Patentblatt 87/3**

(84) Benannte Vertragsstaaten:
**AT BE CH DE FR GB IT LI NL SE**

(56) Entgegenhaltungen:
**DE-A-3 200 674**
**DE-U-8 303 470**
**US-A-2 422 994**
**US-A-2 555 302**
**US-A-2 935 906**
**US-A-3 040 605**
**US-A-3 073 189**
**US-A-3 606 560**

**Patent Abstracts of Japan Band 5, Nr. 68, 8. Mai 1981**
**& JP-A-56-21711**

(73) Patentinhaber: **Gühring, Gottlieb, Herderstrasse 50-54, D-7470 Albstadt 1-Ebingen (DE)**

(72) Erfinder: **Gühring, Knut, Chr.- Landenb.- Strasse 12, D-7470 Albstadt 1 (DE)**

(74) Vertreter: **Grams, Klaus Dieter, Dipl.- Ing., Patentanwaltsbüro Tiedtke- Bühling- Kinne- Grupe- Pellmann- Grams- Struif Bavariaring 4, D-8000 München 2 (DE)**

## Beschreibung

Die Erfindung bezieht sich auf ein innengekühltes Bohrwerkzeug gemäß dem Oberbegriff des Patentanspruchs 1 sowie auf ein Verfahren zur Herstellung eines derartigen Bohrwerkzeugs gemäß dem Oberbegriff des Patentanspruchs 11.

Aus der US-A-3 606 560 ist ein Bohrwerkzeug vorstehend bezeichneter Art bekannt. Bei diesem Bohrer sind die Kühlkanäle sowohl in der Bohrerspitze als auch im Bohrerspitzen-Trägerteil geradlinig ausgebildet. Auf Grund der Einlippen-Gestaltung besitzen die Kühlkanäle im wesentlichen einen Teilringquerschnitt, wobei der Kühlraum im Bohrerspitzen-Trägerteil im Querschnitt größer als derjenige in der Bohrerspitze ausgebildet ist.

Dieser bekannte Bohrer ist als Tiefloch-Bohrer ausgebildet und somit hinsichtlich des Einsatzfeldes beschränkt. Zwar ist aus der US-A-2 422 994 ein Hartmetall-Spiralbohrer bekan ,t, der innenliegende Kühlkanäle besitzt. Ein derartiger Bohrer besitzt jedoch nicht die erwünschte Elastizität und Zähigkeit in den der Spitze abgewandten Bereichen, so daß sich dieser Bohrer bislang in der Praxis nicht durchgesetzt hat.

Im Zuge der jüngeren Werkstoffentwicklung hin zu Aluminiumwerkstoffen mit hohem Siliciumgehalt ist das Bedürfnis entstanden, nicht nur Tiefloch-Bohrer, sondern auch sehr leistungsfähige Durchbohr-Werkzeuge zu schaffen, die sich durch hohe Standzeit und hohe Schnittleistung auszeichnen. Für diese Einsatzgebiete ist aus der US-A-2555302 ein Bohrwerkzeug bekannt, bei dem die Bohrerspitze als Spiralwendel-Bohrerspitze ausgebildet ist, jedoch aus Metall besteht, so daß sich trotz Versorgung durch innenliegende Kühlkanäle Standzeit-Probleme ergeben.

Es besteht somit weiterhin das Bedürfnis, ein innengekühltes Bohrwerkzeug gemäß dem Oberbegriff des Patentanspruchs 1 zu schaffen, dessen hauptsächliche Vorteile darin zu sehen ist, daß verschieden beanspruchte Teile des Bohrwerkzeugs in den spezifischen Werkstoffen ausgeführt werden können, die diesen unterschiedlichen Anforderungen jeweils am besten gerecht werden. So zeichnet sich die Hartmetall-Bohrerspitze durch eine sehr hohe Standfestigkeit, der metallische Bohrerspitzen-Trägerteil hingegen durch eine größere Elastizität und eine höhere Zähigkeit bei immerhin noch sehr hoher Verschleißfesligkeit aus. Beim Bohren mit diesen bekannten Werkzeugen treten allerdings sowohl im Werkstück als auch im Werkzeug sehr hohe thermische Beanspruchungen auf, die dazu führen können, daß der Bohrer dann, wenn er mit solch hohen Schnittgeschwindigkeiten betrieben wird, denen die verwendeten Bohrer-Materialien ohne weiteres standhalten könnten, in der herzustellenden Bohrung frißt. Mit anderen Worten bedeutet dies, daß bei den bekannten Bohrwerkzeugen die positiven Eigenschaften der verwendeten Materialien nur begrenzt ausgenützt werden können.

Der Erfindung liegt die Aufgabe zugrunde, ein Bohrwerkzeug oben beschriebener Art zu schaffen, das sich bei besserer Ausnutzung der verwendeten Materialkombination durch eine noch höhere Schnittleistung auszeichnet.

Diese Aufgabe wird durch die im kennzeichnenden Teil des Patentanspruchs 1 angegebenen Merkmale gelöst.

Die Hauptschneiden des Bohrwerkzeugs können durch die erfindungsgemäßen Maßnahmen bei optimaler Gestaltung des Nebenschneidenverlaufs äußerst intensiv gekühlt werden, wodurch eine so hohe Wärmeabfuhr von der Hauptschneide sichergestellt wird, daß die Schnittgeschwindigkeit des Bohrwerkzeugs an die sehr hochliegende mechanische Belastungsgrenze der Bohrerspitze herangeführt werden kann, ohne dadurch thermische Uberbeanspruchungen in Kauf nehmen zu müssen. Dies gilt für alle Arten von ein- oder mehrschneidigen Bohrwerkzeugen, wie z.B. auch für Wendelbohrwerkzeuge oder für Einlippen-Tieflochbohrwerkzeuge, wobei der besondere Vorteil der Erfindung darin zu sehen ist, daß die Bohrerspitze, ohne die Kühlmittelzufuhr beeinträchtigen zu müssen, geometrisch im Hinblick auf höchste Stabilität und günstigsten Schnittkraftverlauf optimiert werden kann. Für die übertragung des erfindungsgemäßen Grundgedankens auf ein reines Wendelbohrwerkzeug gemäß Unteranspruch 2 bedeutet dies, daß die Kühlkanäle in der wendelförmigen Bohrerspitze erfindungsgemäß so angeordnet sind, daß sie die Leistungsfähigkeit des Wendelbohrwerkzeugs in keiner Weise beeinträchtigen. Es kann sowohl der Bohrerkerndurchmesser relativ kleingehalten werden, wodurch günstige Voraussetzungen für die Spanabfuhr geschaffen werden. Andererseits entfallen jegliche, die Bohrerteile schwächende Übergangskanäle zwischen den Kühlkanälen in der Bohrerspitze und im ebenfalls verdrillten Schneidteil, wodurch ferner das vom Bohrwerkzeug maximal übertragbare Drehmoment angehobenwerden kann. Die Leistungsfähigkeit des Bohrers wird auch nicht durch eine Verlängerung der Bohrerspitze reduziert, d.h. es kann eine sehr lange Bohrerspitze vorgesehen werden, ohne dadurch die Leistungsfähigkeit der Kühlkanäle herabsetzen zu müssen. Der Ubergangsbereich zwischen Bohrerspitze und Bohrer-Schneidteil kann darüber hinaus vollkommen frei von der Schmiermittelkanalführung im Hinblick auf einen optimalen Kraftfluß gestaltet werden. Dabei können auch die Spannuten in der Bohrerspitze weiterhin ohne spürbare Beeinträchtigung der Steifigkeit des Wendelbohrwerkzeugs verhältnismäßig tief ausgebildet werden, so daß die Spanabfuhr bei hohem übertragbarem Torsionsmoment sehr günstig bleibt. Weil die Bohrerspitze nunmehr selbst bei höchsten Schnittleistungen an keine bestimmten Grenzabmessungen mehr gebunden ist, wird auch ein mehrmaliges Nachschleifen des Bohrers möglich, so daß die Hartmetall-Bohrerspitze wesentlich wirtschaftlicher eingesetzt werden kann.

Aufgrund der beim erfindungsgemäßen Wendelbohrwerkzeug vorliegenden günstigen Belastungs- und Kraftflußverhältnisse im Bereich des Übergangs zwischen Bohrerspitze und Bohrer-Schneidteil eignet sich das erfindungsgemäße Wendelbohrwerkzeug insbesondere auch zur Herstellung von sehr tiefen und dünnen Bohrungen.

Auch die Anzahl der Kühlkanäle im Bohrwerkzeug wirkt sich durch die erfindungsgemäßen Maßnahmen nicht negativ auf die Festigkeit des Wendelbohrwerkzeugs aus, weil jeder wendelförmige Kühlkanal für sich in einem Zug und ohne irgendwelche, den Bohrer schwächende Zwischenkanäle zum Schaft geführt werden kann; dabei kann jeder Kühlkanal für sich mit einer ausreichenden Menge an Kühl- oder Schmiermittel gespeist werden, ohne dadurch die Versorgung anderer Kühlkanäle zu beeinflussen.

Die erfindungsgemäß frei optimierbare Gestaltung der Bohrerspitze eröffnet sogar die Möglichkeit, den Bohrer so zu gestalten, daß die Spannuten, die im Bereich der Bohrerspitze wendelförmig verlaufen, im Bohrerspitzen-Trägerteil in gerade Nuten übergehen. Dies hat den zusätzlichen Vorteil, daß für verschiedene, den jeweiligen Schnittbedingungen optimal angepaßte Bohrerspitzen, ein Universal- bzw. Einheitsschaft verwendbar wird, der lediglich noch gerade Kühlkanäle aufweist. Die dadurch erzielbaren wirtschaftlichen Vorteile liegen auf der Hand. Es ergibt sich dadurch aber noch der zusätzliche Vorteil, daß durch dieses geradegenutete Bohrerspitzen-Trägerteil die Länge der Kühlkanäle und darüber hinaus auch die Strömungsverluste in diesen Kanälen verringert werden können. Dabei kann ferner der Querschnitt der Kühlkanäle im Bohrerspitzen-Trägerteil freier gestaltet werden, was zusätzlich zur Anhebung der Kühlleistung bzw. des Kühlungsund Schmierungswirkungsgrads führt.

Mit den Merkmalen des Unteranspruchs 3 entsteht somit ein sehr leistungsfähiger Wendelbohrer, der bei verbesserter Schmierleistung kostengünstiger hergestellt werden kann. Die erfindungsgemäße Lage und Führung der Kühlkanäle kommt dieser Schaft-Spitzen-Kombination dadurch entgegen, daß bei Gestaltung des Übergangs zwischen Bohrerspitze und Bohrspitzen-Trägerteil ein Höchstmaß an konstruktionstechnischem Freiraum zur Optimierung der Verbindungsflächen verbleibt.

Besonders vorteilhaft läßt sich das erfindungsgemäße Prinzip auch auf dem Gebiet der Tieflochbohrer anwenden. Die Weiterbildung mit den Merkmalen des Unteranspruchs 4 führt zu einem Bohrwerkzeug, dessen Schneidengeometrie den jeweils zu bearbeitenden Werkstoffen im Hinblick auf optimale Schnittbedingungen gestaltet werden kann. Bislang wurden gekühlte Hartmetall-Tieflochbohrerspitzen ausschließlich mit Seitenspanwinkeln von 0 Grad verwendet. Die erfindungsgemäße Kühlkanalführung ermöglicht nunmehr die individuelle Anpassung des Seitenspanwinkels an das zu bearbeitende Material, ohne daß dabei die Bohrerspitze verkürzt werden müßte. Dies ist in besonderem Maße bei Tieflochbohrern wichtig, weil hier der Bohrerkopf eine gute und axial lange Führung im Bohrloch benötigt. Der Bohrerkopf kann dabei auch mit mehreren Kühlkanälen versehen werden, die sich dann jeweils fluchtend in Schmierkanälen des Bohrerspitzen-Trägerteils forLsetzen. Dadurch liegt für jeden Schmierkanal in der Bohr erspitze ein optimaler Anschlußkanal vor, der als Zulauf- oder Rücklaufkanal dienen kann. Auch für dieses Anwendungsgebiet gilt der bereits oben angesprochene Vorteil, daß die mit unterschiedlichen Schneidengeometrien ausgestalteten Bohrerspitzen in Kombination mit einem Universalbzw. Einheitsschaft verwendet werden können. Insbesondere bei Tieflochbohrern, die mit einer Hochdruck-Schmiermittel-Versorgung arbeiten, bringt dies den weiteren zusätzlichen Vorteil mit sich, daß auch eine Einheits-Kühlmittel-Anschlußhülse für den Bohrerschaft Anwendung finden kann.

Es ist zwar bekannt, Wendelbohrwerkzeuge, die eine aus standfestem Stahl bestehende Bohrersp tze aufweisen, mit innenliegenden Kühlkanälen zu versehen. Derartige Werkzeuge besitzen allerdings durchwegs im Bohrer-Schneidteil einen zentralen Schmiermittelkanal, in den die getrennten Kühlkanäle der Bohrerspitze zusammengeführt werden.

Diese Gestaltung führt einerseits dazu, daß der Bohrer-Kerndurchmesser im Bereich dcs Schneidteils zur Bereitstellung einer ausreichenden Festigkeit bei vorgegebener Kühlleistung verhältnismäßig großgehalten werden muß, was zu Lasten der Spannutentiefe und damit der Spanabführleistung geht. Andererseits erfordert die Zusammenführung der Schmiermittelkanäle stets radial und häufig sogar diametral verlaufende Übergangskanäle im Bohrer, die das zu übertragende Drehmoment und dadurch die mechanische Belastbarkeit des Bohrers insgesamt herabsetzen.

Zu einer besonders vorteilhaften Weiterbildung der Erfindung gelangt man mit den Merkmalen des Unteranspruchs 7. Ein derart ausgestaltetes Bohrwerkzeug, sei es ein Wendelbohrwerkzeug oder auch ein Ein- oder Zweilippen-Tieflochbohrwerkzeug, besitzt exakt dort die notwendige Oberflächenhärte Zähigkeit und Elastizität wo dies jeweils am meisten gefordert wird. Die von der äußerst standfesten Bohrerspitze einwirkenden hohen Zerspanungskräfte können von dem metallischen Bohrerspitzen-Trägerteil zuverlässig aufgenommen werden, zumal sich diese für den Trägerteil vorgesehenen Materialien sehr gut für eine Verbindung mit der Hartmetall-Bohrerspitze eignen.

Die Hartmetall-Bohrerspitze mit einer beispielsweise Strangpreßverfahren eingeformten Kühlkanal-Wendel kann nach dem Sintern außenseitig ohne größere Probleme bearbeitet werden, so daß auch die Übergangsflächen zwischen Bohrerspitze und Bohrerspitzen-Trägerteil konstruktiv optimiert werden können. Als besonders vorteilhaft hat sich eine Prismenflächenverbindung herausgestellt, da auf diese Weise einerseits eine große Kontaktfläche zwischen den zu verbindenden Teilen bereitgestellt wird, und weil andererseits auf diese Weise Überbeanspruchungen des relativ zug- und kontaktkraftempfindlichen Sintermetalls vermieden werden.

Es hat sich herausgestellt, daß sich bei einem formschlüssigen Aufsetzen der Sintermetall-Bohrerspitze beispielsweise über die Prismenflächenverbindung gemäß Patentanspruch 8 sehr gute Ergebnisse mit einer Lötverbindung erzielen lassen, auch wenn die Bohrerspitze den Bohrerkopf eines Tieflochbohrers darstellt, der mit extrem großen Vorschubkräften betrieben wird.

Die Schnittleistung des erfindungsgemäßen Bohrwerkzeugs kann zusätzlich dadurch angehoben werden, daß die Bohrerspitze vor dem Aufsetzen bzw. vor dem Auflöten auf das Bohrerspätzen-Trägerteil mit einer PVD- oder einer CVD-Beschichtung versehen wird. Derartige Beschichtungen bestehen beispielsweise aus Titannitrid (TIN) oder Titankarbid.

Ein besonders vorteilhaftes Verfahren zur Herstellung der erfindungsgemäßen Bohrwerkzeuge ist Gegenstand des Patentanspruchs 11. Die Herstellung eines Sintermetallrohlings ist mit verhältnismäßig geringem Aufwand verbunden, darüber hinaus ist dieser Rohling vor dem Sintern sehr einfach und damit wirtschaftlich bearbeitbar.

Das Einarbeiten von Kühlkanal-Ausnehmungen kann dabei entwender mit spaabhebenden Werkzeugen oder aber auch durch Umform- bzw. Formwerkzeuge geschehen.

Insbesondere bei Verwendung von Feinkorn-Hartmetallen kann das Verfahren gemäß Unteranspruch 12 in vorteilhafter Weise angewandt werden, dabei kann die Kühlkanal-Ausnehmung bzw. die Kühlkanal-Ausnehmungen entwerder beim Strangpressen mit extrudiert oder in den fertig abgelenkten Rohling nachträglich eingearbeitet werden.

Die Weiterbildung des Verfahrens gemäß Unteranspruch 13 führt zu einer weteren Reduzierung des Bearbeitungsaufwands.

Mit der Weiterbildung gemäß Unteranspruch 14 wird zuverlässig verhindert, daß bei der Herstellung der Lötverbindung zwischen der Bohrerspitze und dem Bohrerspitzen-Trägerteil Lot unter Kapillarwirkung in die Kühlmittelkanäle eindringt. Das lotabweisende Mittel kann nach dem Lötvorgang auf chemischem oder mechanischem Wege entfern werden. Nachstehend weden anhand schematischer Zeichnungen mehrere Ausführungsbeispiele der Erfindung nährer erläurtert.

Es zeigen:

Figur 1 eine perspektivische Ansicht des Bohrwerkzeuges in der Ausführungsform als Wendelbohrwerkzeug

Figur 1a eine schematische Darstellung zur Verdeutlichung einer vorteilhaften Ausgestaltung der Prismenflächenverbindung zwischen den Bohrerspitze und dem Bohrerspitzen-Trägerteil,

Figur 2 eine perspektivische Ansicht eines aus einer Strangpreßeinrichtung extrudierten Sintermetall-Rohlings,

Figur 3 eine Seitenansicht einer etwas angewandelten Form eines Wendelbohrwerkzeugs, das eine Hartmetall-Spiralbohrerspitze und ein gerade genutetes Bohrerspitzen-Trägerteil besitzt,

Figur 4 eine Schnittansicht des in Figur 3 gezeigten Bohrers bei einer Schnittführung entlang der Linie IV-IV in Figur 3, und

Figur 5 bis 7 perspektivische Ansichten von Tieflochbohrern, die eine Hartmetall-Bohrerspitze mit einem positiven Seitenspanwinkel besitzen.

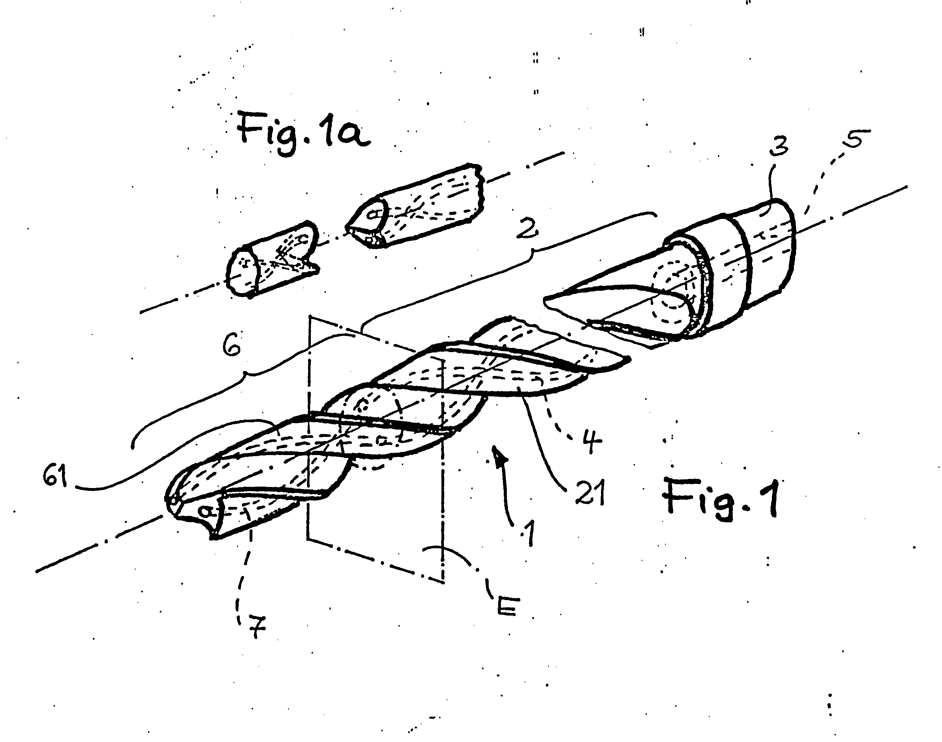

Figur 1 zeigt ein Wendelbohrwerkzeug 1 mit einem metallischen Bohrspitzen-Trägerteil 2, das in diesem Fall als Bohrer-Schneidteil ausgebildet ist und in einen Bohrerschaft 3 übergeht. Im Bohrer-Schneidteil 2 sind wendelförmig verlaufende in den Stegen 21 liegende Kühlkanäle bzw. Schmierkanäle 4 ausgebildet, die im Bereich des Schafts 3 in eine zentrale Schmiermittel-Zuführbohrung 5 übergehen. Auf den Bohrer-SChneidteil 2 ist eine Hartmetall-Bohrer-spitze 6 aufgesetzt, beispielsweise aufgelötet oder aufgeschweißt.

Die Hartmetall-Bohrerspitze 6 besteht aus Sintermetall. Die Bohrerspitze 6 ist beispielswej se im Strangpreßverfahren hergestellt, wobei z. B. während des Strangpreßvorgangs des die Bohrerspitze bildenden Sintermetall-Rohlings gleichzeitig wendelförmige Kühlkanäle 7 in den Rohling eingeformt wurden. Die Kühlkanäle 7 verlaufen damit ebenfalls in den Stegen 61 der Bohrerspitze 6.

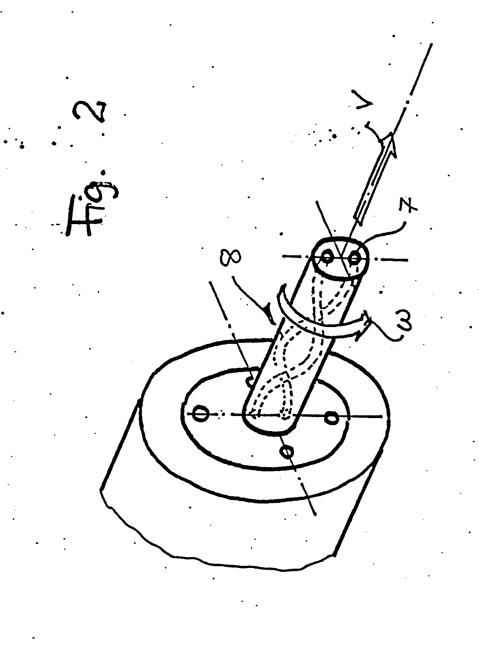

Die Herstellung der Hartmetall-Bohrerspitze erfolgt beispielsweise durch Extrudieren eines kreiszylinderförmiten Sintermetall-Rohlings 8 mittels einer Strangpreßeinrichtung 9, in der eine Preß-Formdüse angeordnet ist. Zur Herstellung einer bzw. mehrerer, auf die Anzahl der Bohrerschneiden abgestimmten wendelförmig verlaufenden Kühlkanäle 7 wird der aus der Strangpreßeinrichtung austretende Sintermetall-Rohling 8 mit einer auf den Materialfluß v (vgl. Fig. 2), auf die angestrebte Bohrergeometrie und auf den Wendelverlauf der Kühlkanäle 4 im Bohrer-Schneidteil 2 abgestimmten Winkelgeschwindigkeit ω (vgl. Fig. 2) verdrillt, so daß ein weiterhin zylinderförmiger Metall-Rohling 8 entsteht, in dem bereits wendelförmig verlaufende Schmiermittel kanal-Ausnehmungen 7 vorliegen. Das Verdrillen erfolgt durch eine nicht näher dargestellte Verdrilleinrichtung, die bevorzugterweise mit Mitteln versehen ist, die für eine stetige und gleichmäßige axiale Führung des Sintermetall-Rohlings 8 und für eine ebenfalls kontinuierliche und stetige Verdrillbewegung sorgen. Nach dem Extrudieren aus Sintermetall-Rohlings 8 wird dieser auf ein vorbestimmtes Maß abgelängt und im Vakumnofen gesintert, wobei man bevorzugterweise so vorgeht, daß diese abgelängten Sintermetall-Rohlingstücke auf Graphitplatten gelegt und auf diesen gesintert werden. In der Regel ist der Sintervorgang dieser Rohlinge mit schrumpfungsbedingten Maßänderungen verbunden. Durch einige Versuche kann man die Maßhaltigkeit für eine vorbestimmte Bohrergeometrie exakt ermitteln, so daß die Maschinen- bzw. Vorrichtungsparameter dann optimal eingestellt werden können.

Wenn man durch Versuche die Maßhaltigkeit der Sintermetall-Rohlinge 8 ermittelt, kann man auch exakt auf den Verlauf der Wendel der Kühlkkanäle 7 im Innern des Rohlings 8 schließen. Bei Kenntnis dieses Verlaufs kann dann mit herkömmlichen spanabhebenden Werkzeugmaschinen, béispielsweise mit Schleifmaschinen die Bohrer-Wendelnut eingearbeitet werden. Das Strangpreßwerkzeug wird so gewählt, daß nach dem Sintern die Kühlkanäle 7 in der Bohrerspit ze 6 auf dem gleichen Radius liegen und den gleichen Durchmesser besitzen wie die wendelförmigen Kühlkanäle 4 im metallischen Schneidteil 2. Dies kann durch Versuche und durch Beeinflussung der Sintermetallpulvermasse zuverlässig erreicht werden.

Bei der Endbearbeitung der Spannuten im Bereich der Bohrerspitze 6 wird auch die Bohrerspitze und der der Spitze abgewandte Ubergangsbereich zum metallischen Bohrer-Schneidteil 2 geschliffen. In Fig. 1 ist lediglich schematisch mit der strichpunktiert dargestellten Ebene E der Ubergangsabschnitt zwischen Bohrerspitze 6 und metallischem Schneidteil 2 angedeutet. Mit dieser Darstellung soll zum Ausdruck kommen, daß die wendelförmigen Kühlkanäle 7 und 4 in den Kontaktebenen E fluchtend und ohne Stufensprung ineinander übergehen.

Die Kontaktfläche zwischen Bohrerspitze 6 und Schneidteil 2 kann beispielsweise von einer Kegelmantelfläche gebildet sein. Besonders vorteilhaft erweist sich allerdings eine Prismenflächenverbindung, wie sie schematisch in Fig. 1a dargestellt ist. Für diese Verbindung sind die miteinander zu verbindenden Teile 6 und 2 - deren Anschlußflächengestaltungen untereinander vertauscht werden können - derart bearbeitet, daß sie mit den Kontaktflächen formschlüssig ineinandergreifen. Die wendelförmigen Kühlkanäle 7 bzw. 4 sollen dabei möglichst im Zentrum der jeweiligen Kontaktflächen zu liegen kommen. Über die Kontaktflächen werden die zu verbindenden Teile 6 bzw. 2 entweder verlötet oder verschweißt.

Der Bohrer-Schneidteil besteht aus verschleißfestem, zähem Stahl, wie zum Beispiel aus einem un- oder niedriglegierten Werkzeugstahl, einem Schnellarbeitsstahl, einem Nitrierstahl, oder einem anderen gängigen Werkzeugstahl, der eine ausreichende Elastizität, Oberflächenhärte und Zähigkeit besitzt.

Abweichend von der in den Figuren dargestellten Ausführungsform kann der Wendelbohrer auch als Tieflochbohrer oder auch als Wendelbohrer mit lediglich einem wendelförmig verlaufenden Kühl- oder Schmiermittelkanal ausgebildet sein.

Selbstverständlich kann die Gestaltung der Verbindungsfläche E konstruktiv im Hinblick auf einen optimierten Kraftfluß und eine möglichst große Schonung der Sintermetall-Bohrerspitze 6 optimiert werden.

In Abwandlung der vorstehend beschriebenen Ausführungsform kann die Bohrerspitze 6 auch auf andere Weise hergestellt werden. So kann beispielsweise ein Sintermetall-Rohling im rohen Zustand d. h. im ungesinterten Zustand mit geraden Kühl- bzw. Schmiermittelkanal-Ausnehmunüen versehen werden. Im ungesinterten Zustand ist die mit relativ geringem Aufwand auch mit spanabhebenden Werkzeugen möglich. Die geraden Kühlkanäle können aber auch beim Extrudieren des Rohlings mit eingeformt werden. Nach dem Sintern des auf ein bestirmmtes Maß abgelängten Rohlings wird dieser unter Temperatureinwirkung in ähnlicher Weise, wie ein rein metallischer wendelbohrer, derart verdrillt, daß die gewünschte Wendelsteigung erzielt wird.

Beim Verbinden der Kontaktflächen zwischen der Bohrerspitze 6 und dem Bohrer-Schneidteil 2 geht man am besten so vor, daß die sich fluchtend einander gegenüberliegenden Kühlkanäle 7 und 4 vor dem Verlöten mit einem lotabweisenden Mittel verschlossen werden. Dieses lotabweisende Mittel kann beispielsweise von einem stabförmigen Körper gebildet sein, der sich durch die Kühlkanäle 7 in der Bohrerspitze 6 erstreckt und über die Verbindungsfläche E um ein ausreichend großes Maß vorsteht, damit er auch in die zugehörige Kühlkanalwendel 4 des Bohrer-Schneidteils 2 hineinragen kann. Nach dem Abschluß des Lötvorgangs wird der stabförmige Korper aus dem Wendelbohrer herausgezogen, so daß ein Kühlmittelkanal 7 und 4 entsteht, der von der Bohrerspitze bis zum Schaft 3 keinerlei Querschnittseinschnürungen besitzt.

Nach dem Auflöten der Bohrerspitze werden deren Spannut und Schneiden auf Endmaß geschliffen.

In den Figuren 3 und 4 ist eine weitere Ausführungsform des Bohrwerkzeugs gezeigt das wiederum als Wendelbohrwerkzeug gestaltet ist. Dieses Wendelbohrwerkzeug besitzt eine Bohrerspitze 6, die identisch mit der vorher in bezug auf die Figuren 1 und 1a beschrieben. Bohrerspitze ausgebildet ist. Die Bohrerspitze 6 ist wiederum formschlüssig über eine Prismenflächenverbindung mit einem Hartmetall-Bohrerspitze 6 innerliegende Kühlmittelkanäle 91 und 92 aufweist. Das Bohrerspitzen-Trägerteil 9 ist in diesem Fall von einem doppelt gesickten Rohr gebildet, das gerade Spanabführnuten 93 und 94 aufweist. Die Kühlmittelkanäle 91 und 92 gehen fluchtend und ohne Querschnittsveränderung in die jeweiligen Kühlmittelkanäle 7 der Bohrespitze über. Das Rohr besteht aus vergütetem Stahl und ist bevorzugterweise ein gewalztes Stahlrohr.

Das in den Figuren 3 und 4 gezeigte Bohrerspitzen-Trägerteil 9 kann somit als Einheits- und Universalschaft für verschiedenste Wendelbohrwerkzeuge dienen, bei denen lediglich die Bohrerspitze dem jeweils vorliegenden Einsatzgebiet angepaßt ist. Anstatt des dargestellten Wendelbohrkopfs kann auch ein Zweilippen-Tiefloch-Bohrkopf aufgesetzt werden, der ebenfalls verdrillt ist.

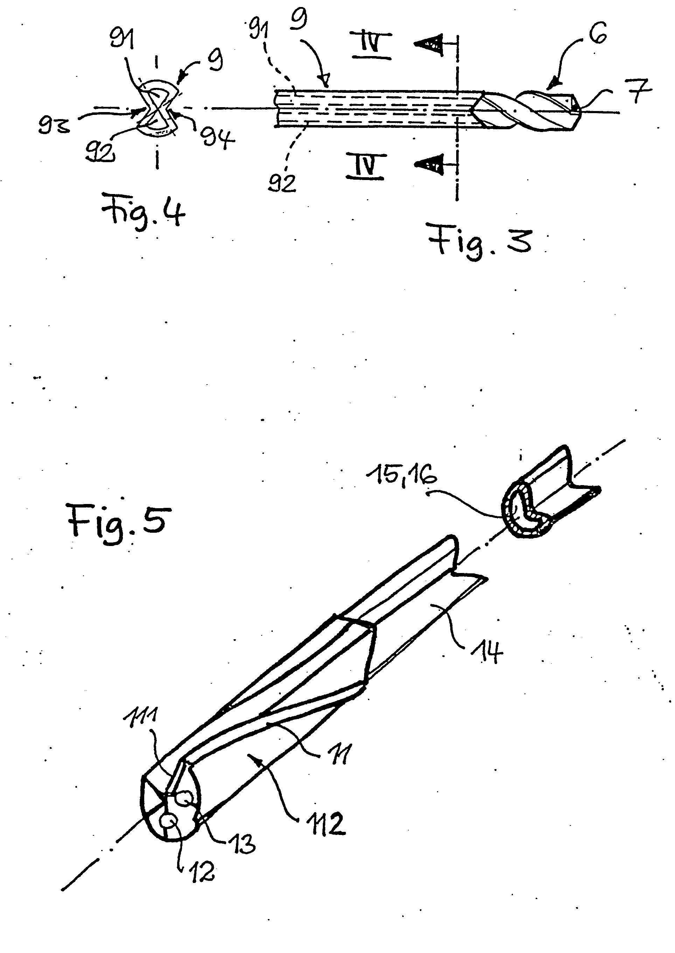

Figur 5 zeigt ein weiteres Ausführungsbeispiel des Bohrwerkzeugs, das in diesem Fall als Einlippenbohrer ausgebildet ist, der in erster Linie dann Anwendung findet, wenn extrem genaue und tiefe Bohrungen hergestellt werden sollen. Dieses Bohrwerkzeug kann als Voll-, Auf- oder Kernlochbohrwerkzeug Anwendung finden.

Der in Figur 5 gezeigte Bohrkopf 11 besteht aus Hartmetall und weist innenliegende Kühl- bzw. Schmiermittelkanäle auf, die von den Stirnflächen ausgehend wendelförmig im Inneren des Bohrkopfs verlaufen. Diese Kanäle 12 und 13 gehen fluchtend in einen Schmiermittelkanal 15 bzw. 16 eines Tiefloch-Bohrerschafts 14 über, der als Voll- oder Rohrschaft ausgebildet sein kann. Die Bohrerspitze 11 ist dabei wiederum auf den Bohrerschaft 14 über eine Prismenflächenverbindung aufgelötet. Von der Hauptschneide 111 ausgehend erstreckt sich eine wendelförmige Längsfase 112.

Man erkennt aus figur 5, daß die Hartmetall Bohrerspitze 11 einen positiven bzw. von null verschiedenen Seitenspanwinkel besitzt. Der Seitenspanwinkel des Bohrerkopfs 11 ist dem jeweils zu bearbeitenden Material angepaßt: So genügt bei der Bearbeilung von Grauguß bereits ein sehr kleiner Seitenspanwinkel, bei der Bearbeilung von siliziumhaltigen Aluminiumwerkstoffen wird dieser Seitenspanwinkel allerdings beträchtliche Werte annehmen. Bei einer für die Führung des Bohrkopfs 11 verantwortlichen axialen Mindestlänge des Bohrkopfs 11 ergibt sich dann eine relativ starke Verdrillung des Bohrkopfs. Mit den weiter oben beschriebenen Verfahren zur Herstellung der Bohrerspitzen stellt diese Verdrillung der Schneiden und der innenliegenden Kühlkanäle allerdings kein besonderes Problem dar.

Um die Zerspanungsleistung des Bohrkopfs 11 weiter anheben zu können, ist es besonders vorteilhaft, den Bohrkopf vor dem Anlöten an den Schaft 14 und nach der Endbearbeitung der Schneiden mit einer PVD- bzw. CVD-Beschichtung zu versehen. Die Abkürzung PVD steht für die Fachbezeichnung "physical vapourite deposite" und die Abkürzung CVD für die Fachbezeichnung "chemical vapourite deposite" Eine derartige Beschichtung, die beispielsweise Titannitrid oder Titankarbid enthält wird auf den Bohrkopf aufgedampft. Diese Beschichtung trägt selbstverständlich auch bei den vorher beschriebenen Bohrwerkzeugen zur Erhöhung der Schnittleistung bei, allerdings ist es gerade bei Tiefloch-Bohrwerkzeugen besonders wichtig, die Standzeit so hoch wie möglich zu halten, da derartige Werkzeuge mit extremen Vorschubkräften belastet werden.

Der in Figur 5 gezeigte Bohrkopf 11 weist zwei wendelförmige Kühlkanäle auf, die fluchtend in die geraden Kühlkanäle des Schafts 14 übergehen. Anstelle der beiden Kühlkanäle 12 und 13 kann der Bohrkopf 11 auch nur mit lediglich einem sich wendelförmig durch den Kopf 11 erstreckenden Kühlkanal versehen werden, wobei für den Fall besonders großer Kühlkanalquerschnitte ein Versteifungssteg vorgesehen werden kann.

Die Erfindung schafft somit ein Bohrwerkzeug mit einem metallischen Bohrerspitzen-Trägerteil, auf den eine Sintermetall-Bohrerspitze aufgesetzt ist. Die Bohrerspitze besitzt zumindest einen schraubenförmig verlaufenden innenliegenden Kühlkanal, der sich fluchtend in einen zugeordneten Kühlkanal des Bohrerspitzen-Trägerteils fortsetzt. Dieses Bohrwerkzeug zeichnet sich insbesondere durch eine sehr hohe mechanische und thermische Belastbarkeit aus, die durch die Kühlkanalführung im Inneren des Bohrers in keiner Weise negativ beeinflußt wird, so daß die Standzeit und die Schnittleistung des Bohrers stark angehoben werden können. Diese Vorteile gelten sowohl für reine Wendelbohrwerkzeuge als auch für Ein- oder Mehrlippen-Tieflochbohrwerkzeuge, bei deneü sich der besondere Vorteil ergibt, daß die Geometrie des Bohrkopfs dem jeweils zu bearbeitenden Werkstoff optimal angepaßt werden kann.

Besonders vorteilhaft ist die sich aus dem Erfindungsgedanken herleitbare Möglichkeit, geradegenutete, mit Hohlraumen versebene Universalschäfte vorzusehen, auf die die verschiedenen Bohrerspitzen über Prismenflächenverkleidungen aufgesetzt werden.

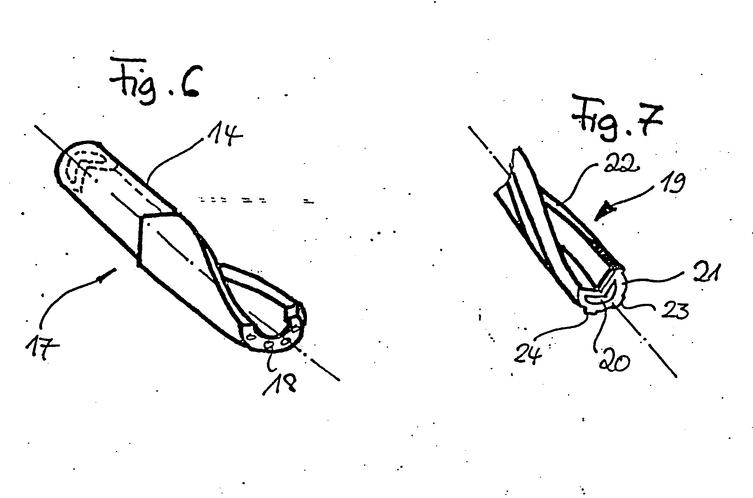

Figur 6 zeigt eine Hartmetall-Spitze eines Einlippen-Tiefloch-Kernbohrers 17, aus dessen Stirnfläche wiederum mehrere Kühlmittelkanäle 18 austreten, die über den Hohlschaft 14 gespeist werden. Die Verbindung zwischen Schaft 14 und Bohrerspitze erfolgt wieder über eine, Prismenflächenverbindung durch Löten.

Figur 7 zeigt eine perspektivische Ansicht eines weiteren Ausführungsbeispiels einer Einlippen-Tiefloch-Bohrerspitze 19, die in Abwandlung zu der in Figur 5 gezeigten Variante mit nur einem Kühlkanal 20 versehen ist, der sich wendelförmig von der Stirnfläche 21 zum nicht dargestellten entsprechend angepaßten Universal-Rohrschaft erstreckt. Man erkennt in dieser Darstellung deutlich die ebenfalls wendelförmige Längsfase 22 sowie die Stabilisierungsstege 23 bzw. 24, deren Lage entsprechend dem herzustellenden Bohrungsdurchmesser gewählt ist. Die Stege 23, 24 und die Längsfase 22 sind einstückiger Bestandteil des Bohrkopfs 19 aus Hartmetall.

**Patentansprüche**

1. Innengekühltes Bohrwerkzeug mit einem metallischen Bohrerspitzen-Trägerteil (2; 9; 14), auf den eine Sintermetall-Bohrerspitze (6; 11) aufgesetzt ist, dadurch gekennzeichnet, daß die Bohrerspitze (6; 11) als Spiralwendel-Bohrerspitze ausgebildet ist und zumindest einen schraubenförmig verlaufenden innenliegenden Kühlkanal (7; 12, 13) aufweist, der sich fluchtend in jeweils einen zugeordneten Kühlkanal (4; 15, 16) des Bohrerspitzen-Trägerteils (2; 9; 14) fortsetzt.

2. Bohrwerkzeug nach Anspruch 1, dadurch gekennzeichnet, daß der Bohrerspitzen-Trägerteil (2) von einem Wendelbohrer-Schneidteil gebildet ist, das in den Bohrerstegen (21) verlaufende Kühlkanäle (4) besitzt, deren Wendel sich in den Kühlkanälen (7) in der Bohrerspitze (6) fortsetzt.

3. Bohrwerkzeug nach Anspruch 1, dadurch gekennzeichnet, daß der Bohrerspitzen-Trägerteil von einem doppelt gesickten Rohr (9) gebildet ist, in dem zwei Kühlkanäle (91, 92) ausgebildet sind, die jeweils fluchtend in einen in jeweils einem Bohrersteg (61) verlaufenden Kühlkanal (7) Bohrerspitze (6) übergehen.

4. Bohrwerkzeug nach Anspruch 1, dadurch gekennzeichnet, daß der Bohrerspitzen-Trägerteil von einem geradgenuteten Bohrerschaft (9; 14) gebildet ist, in dem zumindest ein gerader Kühlkanal (91, 92; 15, 16) verläuft, der fluchtend in jeweils einen wendelförmig verdrillten Kühlkanal (7; 12, 13) der ein- oder mehrschneidigen verdrillten Bohrspitze (6; 11) übergeht.

5. Bohrwerkzeug nach Anspruch 4, dadurch gekennzeichnet, daß der Bohrspitze von einem Ein- oder Zweilippen-Tiefloch-Bohrkopf (11) gebildet ist.

6. Bohrwerkzeug nach Anspruch 5, dadurch gekennzeichnet, daß der Bohrkopf (11) einen einzigen Kühlkanal besitzt, der durch einen im wesentlichen radial verlaufenden Versteifungssteg unterteilt ist.

7. Bohrwerkzeug nach einem der Ansprüche 1 bis 6, dadurch gekennzeichnet, daß der Bohrerspitzen-Trägerteil (2) aus verschleißfestem, zähem Stahl, wie z.B. aus einem unlegierten oder niedrig legierten Werkzeugstahl, einem Schnellarbeitsstahl, einem Nitrierstahl oder einem Walzstahl besteht..

8. Bohrwerkzeug nach einem der Ansprüche 1 bis 7, dadurch gekennzeichnet, daß die Hartmetall-Bohrerspitze (6; 11) auf den Bohrerspitzen-Trägerteil (2; 9; 14) über eine Prismenflächenverbindung (E) aufgesetzt ist.

9. Bohrwerkzeug nach einem der Ansprüche 1 bis 8, dadurch gekennzeichnet, daß die Hartmetall-Bohrerspitze (6; 11) auf den Bohrerspitzen-Trägerteil (2; 9; 14) aufgelötet ist.

10. Bohrwerkzeug nach einem der Ansprüche 1 bis 9, dadurch gekennzeichnet, daß die Hartmetall-Bohrerspitze (6; 11) eine PVD- oder CVD-Beschichtung trägt.

11. Verfahren zur Herstellung eines Bohrwerkzeugs, nach einem der Ansprüche 1 bis 10, wobei auf einen metallischen Bohrerspitzen-Trägerteil eine Sintmetall-Bohrerspitze dreh- und verschiebefest aufgesetzt wird, dadurch gekennzeichnet, daß zur Herstellung der Bohrerspitze (6; 11) ein Sintermetall-Rohling (8) hergestellt wird, der nach Einarbeitung von innenliegenden Kühlkanal-Ausnehmungen (7; 12, 13) gesintert und im Bereich der Schneiden und der Übergangsflächen (E) zum Bohrerspitzen-Trägerteil (2; 9; 14) endbearbeitet wird.

12. Verfahren nach Anspruch 11, dadurch gekennzeichnet, daß ein mit geraden Kühlkanal-Ausnehmungen versehener Rohling hergestellt wird, der nach dem Sintern unter Temperatureinwirkung zur Herstellung einer angestrebten Kühlkanalwendelsteigung verdrillt wird.

13. Verfahren nach Anspruch 11, dadurch gekennzeichnet, daß der Sintermetall-Rohling (8) mit einer der Anzahl der Kühlkanäle im Bohrerspitzen-Trägerteil entsprechenden Zahl von Kühlkanal-Ausnehmungen (7; 12, 13) extrudiert und während des Extrudiervorgangs wendelförmig verdrillt wird.

14. Verfahren nach einem der Ansprüche 11 bis 13, bei dem die Sintermetall-Bohrerspitze auf den Bohrerspitzen-Trägerteil aufgelötet wird, dadurch gekennzeichnet, daß die fluchtend einander gegenüberliegenden Kühlkanäle (4 bzw. 7; 91 und 92 bzw. 7; 15 und 16 bzw. 12 und 13) mit einem lotabweisenden Mittel verschlossen werden, das nach dem Lötvorgang entfernt wird.

**Claims**

1. An internally cooled drill having a metal bit carrier part on which a sintered metal bit is placed, characterized in that the bit (6; 11) is designed as a spiral twist bit and comprises at least one enclosed helical cooling channel (7; 12, 13) each continuing in alignment into a corresponding cooling channel (4; 15, 16) in the bit carrier part (2; 9; 14).

2. A drill according to claim 1, characterized in that the bit carrier part (2) is formed by a twist drill cutting part comprising cooling channels (4) extending through the drill webs (21), the spiral of these channels continuing in the cooling channels (7) in the bit (6).

3. A drill according to claim 1, characterized in that the bit carrier part is formed by a double-creased tube (9) in which there are two cooling channels (91, 92) each running in alignment into a cooling channel (7) extending through a drill web (61) in the bit (6).

4. A drill according to claim 1, characterized in that the bit carrier part is formed by a straight-fluted drill shank (9; 14) in which there is at least one straight cooling channel (91, 92; 15, 16) each running in alignment into a spiral-shaped twisted cooling channel (7; 12, 13) in the single- or double-lipped twisted drill bit (6; 11).

5. A drill according to claim 4, characterized in that the drill bit is formed by a single- or double-lipped deep-hole drill head (11).

6. A drill according to claim 5, characterized in that the drill head (11) possesses a single cooling channel which is divided up by an essentially radially extending reinforcement web.

7. A drill according to one of the claims 1 to 6, characterized in that the bit carrier part (2) is made of abrasion-proof ductile steel such as an unalloyed or low-alloy tool steel, a high speed tool steel, a nitriding steel or a rolled steel.

8. A drill according to one of the claims 1 to 7, characterized in that the carbide bit (6; 11) is placed on the bit carrier part (2; 9; 14) by means of a prism face connection (E).

9. A drill according to one of the claims 1 to 8, characterized in that the carbide bit (6; 11) is soldered onto the bit carrier part (2; 9; 14).

10. A drill according to one of the claims 1 to 9, characterized in that the carbide bit (6; 11) bears a PVD or CVD coating.

11. A method of producing a drill according to one of the claims 1 to 10, in which a sintered metal bit is placed on a metal bit carrier part so as to resist being turned or displaced, characterized in that the production of the bit (6; 11) involves the production of a sintered metal blank (8) which, after the enclosed cooling channel recesses (7; 12, 13) have been worked in, is sintered and finished in the area of the cutting edges and the transitional surfaces (E) towards the bit carrier part (2; 9; 14).

12. A method according to claim 11, characterized in that a blank provided with straight cooling channel recesses is produced which after sintering is twisted under the influence of temperature to produce the desired spiral pitch of the cooling channels.

13. A method according to claim 11, characterized in that the sintered metal blank (8) is extruded with a number of cooling channel recesses (7; 12, 13) corresponding to the number of cooling channels in the bit carrier part, and twisted in a spiral shape during the extrusion process.

14. A method according to one of the claims 11 to 13, wherein the sintered metal bit is soldered onto the bit carrier part, characterized in that the cooling channels (4 or 7; 91 and 92 or 7; 15 and 16 or 12 and 13) opposite each other in alignment are closed off with a solder rejecting medium which is removed after the soldering process.

**Revendications**

1. Outil de perçage à refroidissement interne comprenant une section de support (2; 9; 14) de pointe de foret métallique sur laquelle est montée une pointe de foret en métal fritté (6; 11), caractérisé en ce que la pointe de foret (6; 11) est constituée sous fowe d'une pointe de foret en spirale et comprend au moins un canal de refroidissement (7; 12, 13) situé à l'intérieur, de forme hélicoïdale, qui se prolonge par un canal de refroidissement associé et en alignement (4; 15, 16) dans la section de support (2; 9; 14) de la pointe de foret.

2. Outil de perçage selon la revendication 1, caractérisé en ce que la section de support (2) de la pointe de foret est constituée par une partie coupante hélicoïdale qui comprend dans les nervures (21) du foret des canaux de refroidissement (4) dont l'hélice se prolonge par les canaux de refroidissement (7) de la pointe de foret (6).

3. Outil de perçage selon la revendication 1, caractérisé en ce que la section de support de la pointe de foret est constituée par un tube (9) à double moulure dans lequel sont formés deux canaux de refroidissement (91, 92) qui se prolongent respectivement par des canaux de ref roidissement (7) associés et en alignement dans la pointe de foret (6), passant respectivement dans chaque nervure (61) de la pointe de foret.

4. Outil de perçage selon la revendication 1, caracterise en ce que la section de support de la pointe de foret est constituée par une tige (9; 14) à rainure rectiligne dans laquelle passe au moins un canal de refroidissement rectiligne (91, 92; 15, 16) qui se prolonge par un canal de refroidissement en alignement et respectif, torsadé et de forme hélicoïdale (7; 12, 13) de la pointe de foret torsadée à une ou plusieurs arêtes (6; 11).

5. Outil de perçage selon la revendication 4, caractérisé en ce que la pointe de foret est constituée par une tête de perçage de trou profond (11) à une ou plusieurs lèvres.

6. Outil de perçage selon la revendication 5, caractérisé en ce que la tête de perçage (11) ne comprend qu' un unique canal de refroidissement qui est subdivisé par une branche de renforcement orientée sensiblement radialement.

7. Outil de perçage selon l'une des revendications 1 à 6, caractérisé en ce que la section de support (2) de la pointe de foret est constituée en acier tenace et résistant à l'usure, tel qu'un acier à outil non allié ou légèrement allié, un acier rapide, un acier nitruré ou un acier laminé.

8. Outil de perçage selon l'une des revendications 1 à 7, caractérisé en ce que la pointe de foret en métal dur (6; 11) est montée sur la section de support (2; 9; 14) de la pointe de foret par l'intermédiaire d'une liaison à surfaces prismatiques (E).

9. Outil de perçage selon l'une des revendications 1 à 8, caractérise en ce que la pointe de foret en métal dur (6; 11) est brasée sur la section de support de pointe de foret (2; 9; 14).

10. Outil de perçage selon l'une des revendications 1 à 9, caractérisé en ce que la pointe de foret en métal dur (6; 11) supporte une couche de PVD ou de CVD.

11. procédé pour fabriquer un outil de perçage selon l'une des revendications 1 à 10, dans lequel une pointe de foret en métal fritté est montée de façon fixe en rotation et en translation sur une section de support de pointe de foret métallique, caractérisé en ce que pour fabriquer la pointe de foret (6; 11), on réalise une ébauche en métal fritté (8) qui, après constitution d'évidements (7; 12, 13) formant des canaux de refroidissement internes, est frittée et est soumise à une usinage final dans la région des arêtes et des surfaces de transition (E) avec la section de support (2; 9; 14) de la pointe de foret.

12. Procédé selon la revendication 11, caractérisé en ce qu'on réalise une ébauche munie d'évidements rectilignes constituant des canaux de refroidissement, qui après frittage est torsadée à chaud pour réaliser le pas d'hélice recherché pour les canaux de refroidissement.

13. Procédé selon la revendication 11, caractérisé en ce que l'ébauche en métal fritté (8) est extrudée avec un numbre d'évidements (7; 12; 13) pour canaux de refroidissement qui correspond au nombire de canaux de refroidissement dans la section de support de la pointe de foret, et est torsadée de façon à assumer une forme hélicoïdale pendant le processus d'extrusion.

14. Procédé selon l'une des revendications 11 à 13, dans lequel la pointe de foret en métal fritté est brasée sur la section de support de pointe de foret, caractérisé en ce que les canaux de refroidissement (4 ou 7; 91 et 92 ou 7; 15 et 16 ou 12 et 13) qui sont en alignement mutuel sont bouchés avec un agent antibrasure qui est éliminé après l'opération de brasage.

Fig.1a

Fig.1

Fig. 2

Fig.4

Fig.3

Fig.5

Fig.6

14

17

18

Fig.7

22

19

21

23

24

20